# EUROPÄISCHE PATENTANMELDUNG

(11) **EP 4 442 097 A1**
(43) Veröffentlichungstag der Anmeldung: **09.10.2024**
(21) Anmeldenummer: 24168243.4
(22) Anmeldetag: 03.04.2024
(51) Int. Cl.: A01D 17/00, A01D 17/10, B65G 15/52

(54) **BEFESTIGUNGSSTÜCK, STABANORDNUNG UND STABBAND**

(30) Priorität: 06.04.2023 US 202318131529
(71) Anmelder: Arnold Jäger Holding GmbH, 30559 Hannover (DE)
(72) Erfinder: OORD, Johan, 9717 KV Groningen (NL); JÄGER, Sebastian, 30657 Hannover (DE); ADRICHEM, Johan E., 1911ee Uitgeest (NL)
(74) Vertreter: Lüdtke, Thomas

(57) **Zusammenfassung**

Die Erfindung betrifft ein Befestigungsstück (6) für ein mehrere Stäbe (3) aufweisendes Stabband, mit:
- einem in eine Längsrichtung (L) ausgedehnten Auflagebereich (7) mit einer unten liegenden Auflageseite (7a),
- mindestens einen einstückig mit dem Auflagebereich (7) gefertigten Zwischenbereich (8), und
- einen von dem Zwischenbereich (8) in die Längsrichtung (L) abragenden Befestigungsbereich (9), wobei der Befestigungsbereich (9) durch mindestens eine Buchse (11) mit einer in die Längsrichtung (L) über eine Einstecktiefe (ET) ausgedehnten Einstecköffnung (13) ausgebildet ist, zum Einstecken eines Stabendes (3a) des Stabes (3).

Erfindungsgemäß ist vorgesehen, dass der Zwischenbereich (8) im Querschnitt unrund ausgeführt ist und/oder exzentrisch an den Auflagebereich (7) angeformt ist und ausgehend von dem Auflagebereich (7) in vertikaler Richtung (V) nach unten hin abgewinkelt ist, so dass eine dem Auflagebereich (7) abgewandte Seitenfläche (8a) des Zwischenbereiches (8) in die Längsrichtung (L) zeigt, wobei die Buchse (11) von dieser Seitenfläche (8a) in die Längsrichtung (L) abragt und die Einstecköffnung (13) in der mindestens einen Buchse (11) unterhalb der Auflageseite (7a) des Auflagebereiches (7) verläuft.

## Beschreibung

Die Erfindung betrifft ein Befestigungsstück gemäß dem Oberbegriff des Anspruches 1, eine Stabanordnung und ein Stabband.

Stabbänder für Stabbandförderer landwirtschaftlicher Maschinen sind beispielsweise wie in der DE 195 20 927 A1 offenbart aufgebaut. Derartige Stabbänder weisen zwei oder mehrere parallel zueinander verlaufende, zugfeste elastische und endlose Riemen auf, die durch eine Vielzahl von quer zur Laufrichtung des Stabbandes und parallel zueinander angeordneten Stäben miteinander verbunden sind. Zur Festlegung der Stäbe an den Riemen besitzen die Stäbe abgeflachte und gelochte Auflagebereiche, mit denen sie auf den Riemen aufliegen. Die Verbindung der Auflagebereiche mit den Riemen erfolgt durch Niete oder ähnliche Befestigungsmittel, die den Auflagebereich und die Gurte durchsetzen.

Weitere Stabbänder für landwirtschaftliche Maschinen sind offenbart in DE 27 15 108 A1, WO 95/23497 A1, DE 20 2007 015687 U1 und DE 37 37 066 A1. In DE 200 11 436 U1 oder EP 2 813 135 B1 sind ferner Stabbänder beschrieben, bei denen die Stäbe an ihren Enden nicht direkt mit den Riemen verbunden sind, sondern jeweils über ein aus Rundstahl geschmiedetes Endstück mit daran angeschweißten Hülsen oder Buchsen bzw. ein als Stanzbiegeteil ausgeführtes Befestigungsstück. Die Befestigungsstücke besitzen einen abgeflachten und gelochten Auflagebereich, der in einen Zwischenbereich in Form einer von der Riemenoberseite nach oben verlaufenden Abkröpfung bzw. eines nach unten abgewinkelten Winkelstückes übergeht. An der Abkröpfung ist in DE 200 11 436 U1 ein Befestigungsbereich zur Aufnahme der Stabenden in Form einer Hülse befestigt, während als Befestigung in EP 2 813 135 B1 direkt das Winkelstück dient, wobei die Stäbe darin durch Löcher im Winkelstück gesteckt werden. Die Befestigungsstücke liegen mit ihren Auflagebereichen auf der Oberseite der Gurte auf und sind auf diesen durch Niete befestigt. Die Stäbe bestehen aus Kunststoff und werden durch Verklemmen oder Vernieten an dem jeweiligen Befestigungsbereich festgelegt.

Nachteilig hierbei ist, dass die Herstellung des geschmiedeten und abgekröpften Endstückes gemäß DE 200 11 436 U1 sehr aufwändig ist und durch die nach oben gerichtete Abkröpfung Siebfläche verloren geht und zur Seite hin auch keine Begrenzung der Siebfläche gegeben ist. Ferner ist eine senkrechte Abkröpfung für den darin geschmiedeten Rundstahl nicht möglich, so dass Siebfläche verloren geht. In EP 2 813 135 B1 ist zudem nachteilig, dass der Übergang zwischen dem Stab und dem blechgeformten Winkelstück nicht sehr stabil ist, so dass der Stab bei erhöhten Biegemomenten im Betrieb des Stabbandes nicht sicher am Winkelstück gehalten werden kann. Insgesamt ist die Stabilität bei einem solchen Blechformteil also geringer und dadurch ein dauerhafter Betrieb gefährdet. Ferner übertragen sich erhöhte Temperaturen am Riemen direkt auf die Stäbe.

In EP 0 664 074 A1 ist ferner vorgesehen, dass die Stäbe an ihren Enden im Bereich des mittleren Riemens übereinanderliegen und sich überlappen und dabei einen gegen Querkräfte wirksamen Formschluss aufweisen, beispielsweise durch eine komplementäre Form, beispielsweise konvex und konkav, oder sich überlappende Abschnitte gestuft sind. Nachteilig hierbei ist, dass die endseitige Bearbeitung der Stäbe aufwendig ist und auch eine direkte Anbringung der Stäbe an die Riemen aufwendig und weniger stabil ist.

Aufgabe der Erfindung ist daher ein Befestigungsstück und eine Stabanordnung bereitzustellen, die einfach und günstig zu herzustellen sind und weiterhin eine hohe Stabilität oder Robustheit in der Verbindung aufweisen. Aufgabe der Erfindung ist weiterhin ein Stabband bereitzustellen.

Diese Aufgabe wird durch ein Befestigungsstück, eine Stabanordnung und ein Stabband gemäß den unabhängigen Ansprüchen gelöst. Die Unteransprüche geben dabei bevorzugte Weiterbildungen an.

Erfindungsgemäß ist demnach bei einem Befestigungsstück für ein mehrere Stäbe aufweisendes Stabband für landwirtschaftliche Maschinen vorgesehen, dass mindestens ein im Querschnitt unrunder und/oder exzentrisch an den Auflagebereich angeformter Zwischenbereich vorgesehen ist, der einstückig mit einem in Längsrichtung (bezüglich des Befestigungsstückes) ausgedehnten Auflagebereich gefertigt ist. Über den Auflagebereich wird das Befestigungsstück beispielsweise mittels Nieten mit dem Stabband verbunden. Der Auflagebereich weist dabei eine in vertikaler Richtung unten liegende Auflageseite auf, mit der das Befestigungsstück auf einer Riemenoberseite des Riemens aufliegt. In dem Auflagebereich ist mindestens eine Lochung vorgesehen, durch die die Befestigungsmittel, z.B. Niete, ragen, die auch die Riemen durchsetzen. Der Auflagebereich kann dabei im Bereich der Lochung in Querrichtung verbreitert sein. Dadurch wird erreicht, dass der Auflagebereich im Bereich der Lochung nicht geschwächt wird, so dass sich zumindest über den Auflagebereich ein nahezu konstantes Flächenträgheitsmoment ergibt.

Ferner ist der Zwischenbereich ausgehend von dem Auflagebereich in vertikaler Richtung nach unten hin abgewinkelt, so dass eine dem Auflagebereich abgewandte Seitenfläche des Zwischenbereiches in die Längsrichtung zeigt, vorzugsweise durchgängig. Dies umfasst auch gegenüber der Vertikalen leicht geneigte Seitenflächen, die im Wesentlichen in die Längsrichtung ausgerichtet sind.

Ausgehend von dieser Seitenfläche des Zwischenbereiches ragt mindestens eine Buchse in die Längsrichtung ab, die eine über eine Einstecktiefe ausgedehnte Einstecköffnung aufweist zum Einstecken eines Stabendes eines Stabes des Stabbandes. Durch die nach unten hin abgewinkelte Ausführung des vorzugsweise flachen oder ebenen Zwischenbereiches verläuft die Einstecköffnung in der mindestens einen Buchse unterhalb der Auflageseite des Auflagebereiches. Im montierten Zustand am Stabband werden die Stäbe also nach unten in Richtung der neutralen Faser des Riemens oder auch darunter verschoben.

Ist das Befestigungsstück für einen äußeren Riemen des Stabbandes vorgesehen, weist es lediglich einen Zwischenbereich auf, während bei einer Anwendung an einem mittleren oder inneren Riemen auch an beiden Seiten des Auflagebereiches ein Zwischenbereich mit Buchsen angeordnet sein kann, um eine Befestigung der Stäbe über die Buchsen an beiden Seiten des inneren Riemens zu ermöglichen. Alternativ kann dies auch dadurch erreicht werden, dass Befestigungsstücke mit jeweils nur einem Zwischenbereich mit Buchsen um die Hochachse verdreht zueinander mit ihren Auflagebereichen übereinandergestapelt und diese dann zusammen auf dem inneren Riemen befestigt werden. Auch dadurch werden beidseitig des inneren Riemens Buchsen zur Aufnahme von Stäben bereitgestellt.

Erfindungsgemäß ist ferner eine Stabanordnung aus einem erfindungsgemäßen Befestigungsstück und einem in der Buchse des Befestigungsbereiches aufgenommenen Stabes vorgesehen, sowie ein Stabband mit mehreren Befestigungsstücken bzw. mit mehreren Stabbandanordnungen.

Durch die Erfindung wird der Vorteil erreicht, dass die Stäbe des Stabbandes flexibel nach unten hin in Richtung der neutralen Faser der Riemen oder darunter verschoben werden können, vorzugsweise in einem Bereich von +/- 2mm um die neutrale Faser. Durch das Verschieben in die neutrale Faser wird insbesondere die Stabilität des Stabbandes insgesamt erhöht, da Torsionsmomente auf die Stabenden bzw. deren Vernietung vermieden wird. Zudem kann die exakte Stabteilung und somit die beabsichtigte Siebwirkung über die gesamte Bandlänge, insbesondere auch an den Umlenkstellen, sicher eingehalten sowie ein Einklemmen von Pflanzenmaterial oder Fremdkörpern verhindert werden. Da eine Abwinkelung nach unten hin erfolgt, wird zudem eine optimierte Siebfläche zwischen den Riemen geschaffen, wobei die Zwischenbereiche an den Befestigungsstücken zusammen mit den Riemen als seitliche Begrenzungen für das transportierte Gut wirken können.

Dies kann durch eine exakt senkrechte Abwinkelung des Zwischenbereiches ausgehend vom Auflagebereich weiter verbessert werden. Der Zwischenbereich verläuft dann vorzugsweise parallel zu einer Riemenaußenseite des Riemens, an dem das Befestigungsstück befestigt ist. Ein Abstand zwischen der Riemenaußenseite und dem Zwischenbereich kann beispielsweise maximal 10mm betragen oder vorzugsweise auch Null sein, d.h. der Zwischenbereich berührt die Riemenaußenseite. Dadurch ist die Siebfläche maximal, wenn die der Riemenaußenseite abgewandte Seitenfläche des Zwischenbereiches ausgehend von dem Auflagebereich ebenfalls durchgängig senkrecht zur Längsrichtung (der Stäbe) bzw. parallel zur Riemenaußenseite verläuft.

Zudem kann durch einen unrunden Querschnitt des Zwischenbereiches und/oder einen exzentrisch angeformten Zwischenbereich die Begrenzung der Siebfläche zu den Riemen hin optimiert werden, da der Zwischenbereich bei einer ebenen oder flachen Ausführung das zu siebende Gut seitlich optimaler zusammenhält und dieses nicht seitlich zwischen dem Riemen hindurchfallen kann. Weiterhin kann der Übergang zu den Buchsen oder deren Befestigung einfacher und flexibler erfolgen, beispielsweise bei mehr als einer Buchse bzw. mehr als einem Stab pro Befestigungsstück. Die Buchsen ermöglichen zudem einen stabileren und temperaturoptimierten Übergang zu den Stäben, da sie den Stäben bei Vorliegen eines erhöhten Biegemoments im Betrieb einen zusätzlichen Halt geben und da sie erhöhte Temperaturen beispielsweise vom Riemen effektiv ableiten können. Durch die beschriebene Konstruktion des Befestigungsstückes wird vorteilhafterweise erreicht, dass sich zumindest bis in den Übergangsbereich zu den Stäben ein nahezu konstantes Flächenträgheitsmoment einstellt, was die Robustheit und die Stabilität der Stabanordnung bzw. des Stabbandes im Betrieb erhöht.

Dabei kann ergänzend zu einem Einstecken der Stäbe in die jeweiligen Buchsen vorgesehen sein, dass die Stäbe jeweils endseitig in mit den Einstecköffnungen fluchtende Löcher in dem Zwischenbereich ragen und darüber eine Nietverbindung ausgebildet wird. Durch diese Nietverbindung wird der jeweilige Stab sowohl verdrehsicher als auch in axialer Richtung am Zwischenbereich festgelegt. Die Buchsen halten den jeweiligen Stab dann zusätzlich, sorgen für ein Ableitung höherer Temperaturen und fangen zusätzlich Biegemomente um die Querachse bzw. die Längsrichtung und Scherkräfte ab.

Vorzugsweise ist das Befestigungsstück teilweise oder vollständig in einem subtraktiven oder additiven Fertigungsverfahren hergestellt, beispielsweise in einem Fräsverfahren oder 3D-Druckverfahren, unter Verwendung von metallischen Werkstoffen oder eines thermoplastischen oder eines duroplastischen Polymers. Demnach ist eine Fertigung mit geringem Aufwand und Energiekosten möglich. Es ist aber auch eine Ausbildung als einteiliges Gussteil aus einem metallischen Werkstoff oder aus einem thermoplastischen oder einem duroplastischen Polymer möglich, so dass auf weitere Fertigungsschritte verzichtet werden kann. Alternativ kann auch ein zusätzlicher Umformvorgang vorgesehen sein, beispielsweise um den Zwischenbereich abzuwinkeln und/oder die Buchsen in die gewünschte Ebene relativ zum Riemen zu bringen. Damit kann mithilfe der Erfindung von dem Heißprozess des Schmiedens der Stabenden, wie im Stand der Technik gezeigt, hin zu einem weniger aufwändigen, weniger energieintensiven Montageprozess gewechselt werden.

Bei jeglichen Fertigungsverfahren kann die mindestens eine Buchse des Befestigungsbereiches auch einstückig mit dem Zwischenbereich ausgebildet sein, so dass insgesamt ein einteiliges Befestigungsstück bereitgestellt wird und kein Zusammenfügen von einzelnen Bauteilen mehr nötig ist. Dies vereinfacht den Fertigungsvorgang.

Ist der Zwischenbereich mit seiner Seitenfläche ergänzend in eine Querrichtung ausgedehnt, vorzugsweise leistenartig oder plattenartig, können mindestens zwei Buchsen des Befestigungsbereiches, vorzugsweise mindestens drei oder mehr Buchsen, mit dem Zwischenbereich fest verbunden werden. In dem Fall können die Buchsen in Querrichtung in Abhängigkeit einer vorgegebenen Stabteilung zwischen benachbarten Stäben voneinander beabstandet sein. Diese Stabteilung ist dann vorzugsweise kleiner als eine Nockenteilung zwischen unterseitigen Nocken und/oder oberseitigen Nocken an dem jeweiligen Riemen, was eine flexiblere Gestaltung des Stabbandes ermöglicht.

Vorzugsweise ist weiterhin vorgesehen, dass die Einstecköffnung in der mindestens einen Buchse einen Einsteck-Durchmesser aufweist,
- der über die Einstecktiefe konstant ist, so dass eine hohlzylindrische Einstecköffnung ausgebildet wird zur Aufnahme eines zylindrischen Stabendes des einsteckbaren Stabes, oder
- der über die Einstecktiefe variiert, so dass beispielsweise eine zum Zwischenbereich spitz zulaufende Einstecköffnung ausgebildet wird zur Aufnahme eines spitz zulaufenden Stabendes des einsteckbaren Stabes.

Auf diese Weise können je nach Anforderung und Wahl des Stabes unterschiedliche Stabenden mit entsprechend komplementär zu den Einstecköffnungen ausgebildeten Formen aufgenommen werden. Ergänzend können zum sicheren Halten des Stabes in der Buchse zusätzliche Maßnahmen vorgesehen sein, beispielsweise das Ausbilden einer stoffschlüssigen und/oder kraftschlüssigen und/oder formschlüssigen Verbindung mit der Buchse und/oder dem Zwischenbereich.

Ferner kann vorgesehen sein, dass ein Stab-Durchmesser des aufgenommenen Stabes außerhalb der Buchse (in Richtung der Siebfläche) einem Buchsen-Durchmesser der mindestens einen Buchse entspricht. Der Stab wird also endseitig so geformt, dass er in die Einstecköffnung und ggf. durch Löcher im Zwischenbereich (bei einer zusätzlichen Nietverbindung) passt, dann aber außerhalb der Buchse direkt der Eindruck eines einstückigen Übergangs zwischen beiden entsteht. Dadurch kann die Siebfläche über (nahezu) die gesamte Breite zwischen den beiden Riemen bzw. den beiden Zwischenbereichen ausgedehnt werden und ein Festsetzen von Schmutz vermieden werden.

Die Erfindung wird nachstehend anhand von Ausführungsbeispielen näher erläutert. Es zeigen:
- Fig. 1, 2: Stabbänder mit mehreren quer zur Laufrichtung ausgedehnten Stäben;
- Fig. 3: eine schematische Ansicht einer Stabanordnung mit einem Befestigungsstück;
- Fig. 4: eine erste Ausführung des Befestigungsstückes zur Aufnahme von drei Stäben;
- Fig. 5: eine zweite Ausführung des Befestigungsstückes zur Aufnahme von drei Stäben;
- Fig. 6: eine dritte Ausführung des Befestigungsstückes zur Aufnahme eines Stabes;
- Fig. 7A-7E: weitere Ausführungen des Übergangs zwischen einem Stabende des Stabes und dem Befestigungsstück;
- Fig. 8A, 8B: Befestigungsstücke für unterschiedliche Einbaulagen der Stäbe gemäß einer ersten Variante;
- Fig. 9A, 9B, 9C: Befestigungsstücke für unterschiedliche Einbaulagen der Stäbe gemäß einer zweiten Variante;
- Fig. 10: Befestigungsstücke an einem inneren Riemen des Stabbandes;
- Fig. 10A, 10B, 10C: unterschiedliche Ausführungen der Befestigungsstücke gemäß Fig. 10; und
- Fig. 11A, 11B: weitere Ausführungen von Befestigungsstücken an einem inneren Riemen des Stabbandes.

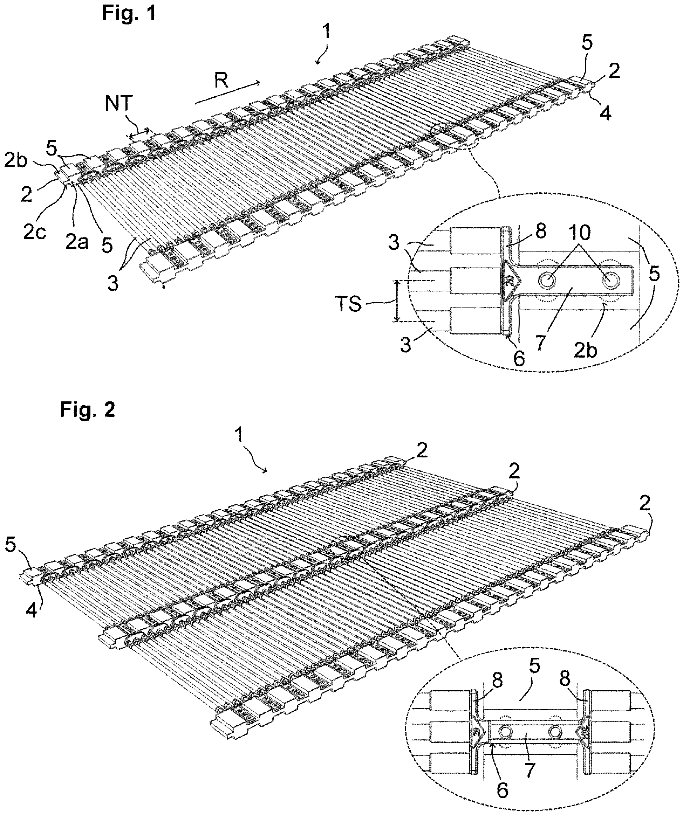

In Figur 1 ist ein Stabband 1 aus zwei parallel zueinander verlaufenden gewebelagenverstärkten Riemen 2 dargestellt, zwischen denen mehrere Stäbe 3 verlaufen. In Figur 2 ist eine Ausführung des Stabbandes 1 gezeigt, bei dem zusätzlich im mittleren Bereich des Stabbandes 1 ein mittlerer oder innerer Riemen 2 verläuft. Die Riemen 2 sind jeweils als Nockenriemen mit mehreren unterseitigen Nocken 4 und diametral gegenüberliegenden oberseitigen Nocken 5 ausgeführt, die jeweils in einer festgelegten Nockenteilung TN voneinander beabstandet sind.

Die unterseitigen Nocken 4 dienen dem Antrieb des Stabbandes 1 in eine Laufrichtung R. Dazu greifen nicht dargestellte Antriebsmittel von Antriebsrädern in die Lücken zwischen den unterseitigen Nocken 4 ein. Die oberseitigen Nocken 5 dienen dem Schutz der auf den Riemen 2 befestigten Befestigungsstücke 6, die in einem flachen, vorzugsweise quaderförmigen Auflagebereich 7 mit einer Auflageseite 7a an einer Riemenoberseite 2b zwischen den oberseitigen Nocken 5 anliegen. Derartige Ausführungen von Stabbändern 1 sind aus dem Stand der Technik bekannt und müssen daher nicht näher erläutert werden.

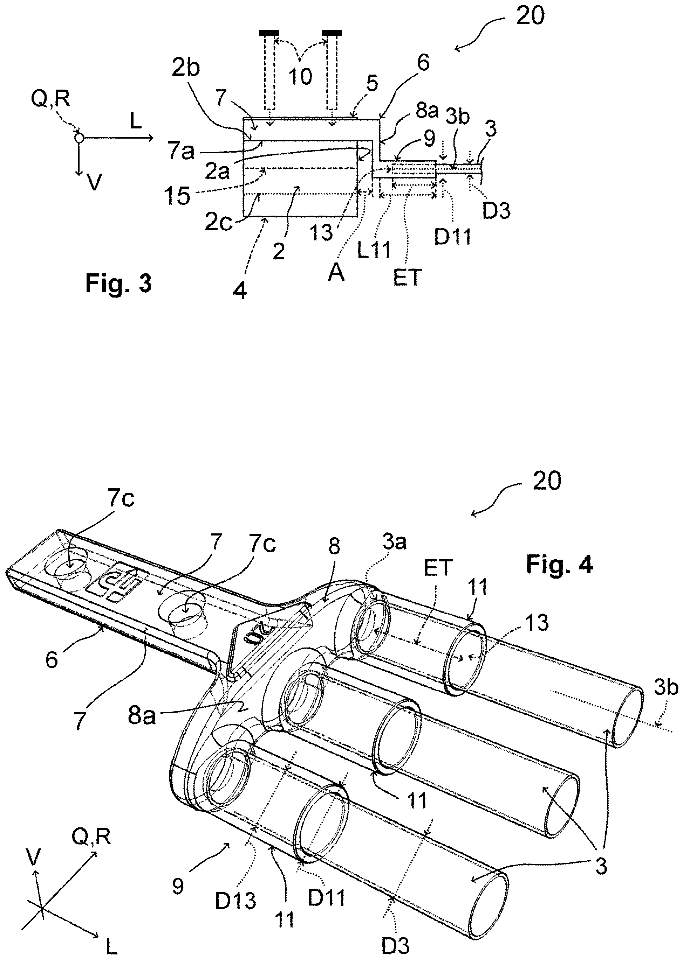

Für eine Befestigung der einzelnen Stäbe 3 auf den jeweiligen Riemen 2 sind die Befestigungsstücke 6 vorgesehen, die wie in Fig. 3 schematisch dargestellt einen in eine Längsrichtung L (bezüglich des Befestigungsstückes 6 oder der Stäbe 3) ausgedehnten Auflagebereich 7, einen gegenüber dem Auflagebereich 7 abgewinkelten bzw. in vertikaler Richtung V verlaufenden Zwischenbereich 8 und einen Befestigungsbereich 9 aufweisen. Der Auflagebereich 7, der vorzugsweise flach ausgeführt ist, so dass dieser nicht über die oberseitigen Nocken 5 hinausragt, dient dem Auflegen und Befestigen des jeweiligen Befestigungsstückes 6 auf einer Riemenoberseite 2b des jeweiligen Riemens 2. Die Befestigung erfolgt dabei über Befestigungsmittel 10, beispielsweise Niete, oder dergleichen, die sowohl den Auflagebereich 7 durch eine Lochung 7c als auch den Riemen 2 durchsetzen oder durchstoßen. Der Auflagebereich 7 kann dabei im Bereich der Lochung 7c in Querrichtung Q bzw. Laufrichtung R verbreitert sein, wie beispielhaft in den Ausschnitten in Fig. 1 und Fig. 2 gestrichelt angedeutet. Dadurch wird erreicht, dass der Auflagebereich 7 im Bereich der Lochung 7c nicht geschwächt wird, so dass sich zumindest über den Auflagebereich 7 ein nahezu konstantes Flächenträgheitsmoment ergibt. Durch die nachfolgend beschriebene Konstruktion der Befestigungsstücke 6 kann ein solches nahezu konstantes Flächenträgheitsmoment zumindest auch bis in den Übergangsbereich zu den Stäben 3 erhalten werden.

Der Auflagebereich 7 geht einstückig in den Zwischenbereich 8 über, der in vertikaler Richtung V nach unten in Richtung einer Riemenunterseite 2c abgewinkelt ist. Der Zwischenbereich 8 ist dabei unrund ausgeführt bzw. ist er bezüglich einer Längsachse des Auflagebereiches 7 exzentrisch bzw. außermittig an diesen angeformt. Für das Befestigungsstück 6 an den äußeren Riemen 2 gemäß Fig. 1 oder 2 geht der Auflagebereich 7 nur an einer Seite in den Zwischenbereich 8 über, da nur eine einseitige Befestigung der Stäbe 3 vorgesehen ist. Für das Befestigungsstück 6 an dem inneren Riemen 2 gemäß Fig. 2 ist gemäß dieser Ausführung an beiden Seiten des Auflagebereiches 7 ein einstückig damit verbundener Zwischenbereich 8 vorgesehen.

Der jeweilige Zwischenbereich 8 verläuft in vertikaler Richtung V im Wesentlichen senkrecht zum Auflagebereich 7, so dass er parallel zu einer Riemenaußenseite 2a ausgerichtet ist. Eine Seitenfläche 8a des Zwischenbereiches 8 zeigt ausgehend von dem Auflagebereich 7 durchgängig in die Längsrichtung L bzw. verläuft diese Seitenfläche 8a im Wesentlichen senkrecht zur Längsrichtung L. Die Seitenfläche 8a wird dabei als im Wesentlichen eben angenommen.

Ein Abstand A zwischen dem Zwischenbereich 8 und der Riemenaußenseite 2a ist dabei vorzugsweise kleiner als 10mm, wodurch die Siebfläche auf dem Stabband 1 optimiert werden kann. Der Zwischenbereich 8 kann beispielsweise auch direkt an der Riemenaußenseite 2a anliegen (A ≈ 0), um die Siebfläche zu maximieren. Je nach Anzahl von Stäben 3 pro Befestigungsstück 6 erstreckt sich der jeweilige Zwischenbereich 8 mit seiner Seitenfläche 8a zudem leistenartig quer zum Auflagebereich 7 bzw. zu den Stäben 3, d.h. in eine Querrichtung Q bzw. in die Laufrichtung R des jeweiligen Riemens 2.

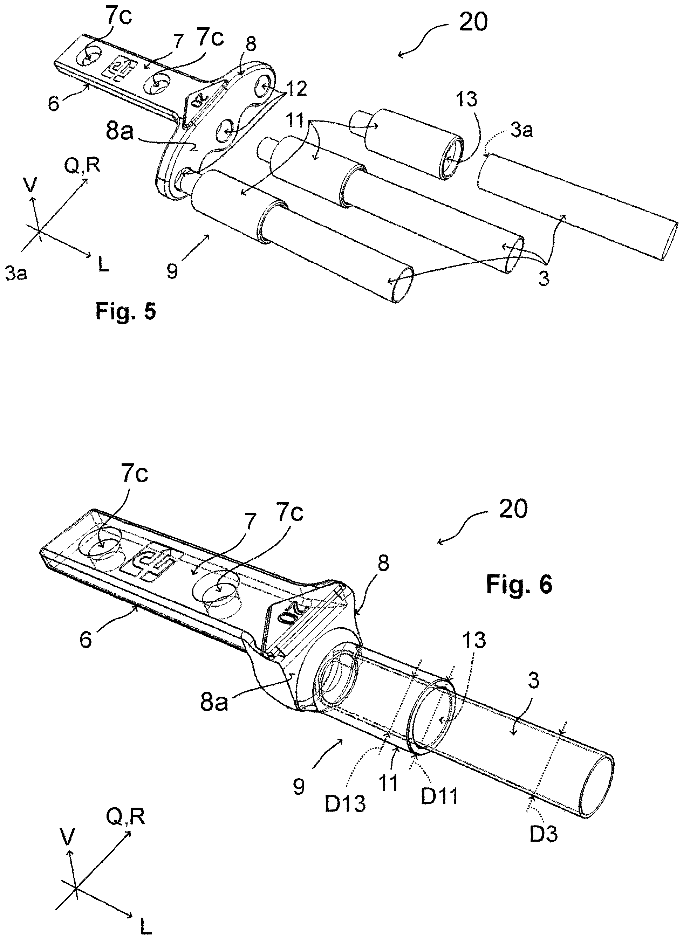

Der sich daran anschließende Befestigungsbereich 9 kann unterschiedliche Ausführungen haben. Wie in Fig. 4 und 5 dargestellt, wird der Befestigungsbereich 9 durch mehrere zylinderförmige Hülsen oder Buchsen 11 gebildet, die jeweils mit dem Zwischenbereich 8 verbunden sind. Die Buchsen 11 ragen dabei senkrecht von der Seitenfläche 8a in die Längsrichtung L ab. Die Buchsen 11 und der flache Auflagebereich 7 verlaufen also parallel zueinander in die Längsrichtung L und ragen in entgegengesetzte Richtungen von dem Zwischenbereich 8 ab.

Die Buchsen 11 sind vorzugsweise einstückig mit dem Zwischenbereich 8 und dem Auflagebereich 7 gefertigt, so dass insgesamt ein einstückiges Befestigungsstück 6 bereitgestellt wird. Das Befestigungsstück 6 kann dazu beispielsweise in einem subtraktiven oder additiven Fertigungsverfahren geformt werden, beispielsweise in einem Fräsverfahren oder 3D-Druckverfahren oder dergleichen, unter Verwendung von metallischen Werkstoffen oder thermoplastischen oder duroplastischen Polymeren. Weiterhin kann ein Gussverfahren mit denselben Materialien vorgesehen sein, um das Befestigungsstück als metallisches Gussteil bereitzustellen. Bei dieser Ausführung ist nur ein Herstellungsvorgang nötig, was die Herstellung insgesamt vereinfacht. Zudem kann auf den Heißprozess des Schmiedens der Stabenden verzichtet werden und stattdessen auf einen insgesamt weniger aufwändigen, weniger energieintensiven Montageprozess zurückgegriffen werden.

Die Buchsen 11 können aber wie in Fig. 5 in einer Explosionsdarstellung dargestellt auch in Löcher 12 im Zwischenbereich 8 eingesteckt bzw. eingebracht und nachträglich in einem weiteren Verbindungsvorgang mit dem Zwischenbereich 8 verbunden werden, beispielsweise in einem Nietvorgang, Schraubvorgang, Klebevorgang, Schweißvorgang, Lötvorgang, etc. Es kann also auch eine stoffschlüssige und/oder kraftschlüssige und/oder formschlüssige Verbindung zwischen dem Zwischenbereich 8 und den Buchsen 11 vorgesehen sein. In dem Fall ist lediglich der Auflagebereich 7 mit dem Zwischenbereich 8 in einem der o.g. Fertigungsverfahren einstückig gefertigt.

Der Befestigungsbereich 9 mit den Buchsen 11 dient der Aufnahme eines oder mehrerer Stäbe 3, je nachdem, wie viele Stäbe 3 je Befestigungsstück 6 gehalten werden sollen, was abhängig von der Verwendung des Stabbandes 1 ist. Demnach können Stabanordnungen 20 mit lediglich einem Stab 3 (Single Rod, vgl. Fig. 6), zwei Stäben 3 (Twin-Rod, nicht dargestellt), drei Stäben 3 (Triple-Rod, vgl. Fig. 1-5) oder auch mehr als drei Stäben 3 pro Befestigungsstück 6 vorgesehen sein, wobei jeder Stab 3 über eine einzelne Buchse 11 am Zwischenbereich 8 des Befestigungsstückes 6 gehalten wird und ausgehend davon in die Längsrichtung L verläuft. Es kann aber auch vorgesehen sein, dass mehrere solcher Buchsen 11 zu einer Gesamtbuchse zusammengefasst sind (nicht dargestellt) und die Gesamtbuchse am Zwischenbereich 8 befestigt ist. In dieser Gesamtbuchse können dann in Querrichtung Q voneinander beabstandet mehrere Stäbe 3 aufgenommen werden (jeweils über in Querrichtung Q voneinander beabstandete Einstecköffnungen 13).

Der Zwischenbereich 8, der den Übergang zwischen dem Auflagebereich 7 und dem Befestigungsbereich 9 bildet, ist bei zwei oder mehreren Stäben 3 mit seiner Seitenfläche 8a in die Querrichtung Q bzw. in die Laufrichtung R des Riemens 2 über einen größeren Bereich plattenartig oder leistenartig ausgedehnt, um in Querrichtung Q mehrere Buchsen 11 nebeneinander und beabstandet voneinander (oder eine größere Gesamtbuchse) halten zu können. Bei nur einem Stab 3 hingegen weist der Zwischenbereich 8 mit seiner Seitenfläche 8a eine Ausdehnung in Querrichtung Q auf, die beispielsweise in etwa einem Buchsen-Durchmesser D11 (Außendurchmesser) der Buchse 11 entspricht (oder etwas breiter), wie in Fig. 6 beispielhaft dargestellt.

Daraus folgt, dass über die konstruktive Ausführung des leistenartigen Zwischenbereiches 8 und des Befestigungsbereiches 9 eine Stabteilung TS festgelegt werden kann. Bei der Aufnahme von zwei oder mehreren Stäben 3 über ein solches Befestigungsstück 6 kann eine Stabteilung TS zwischen den einzelnen Stäben 3 erreicht werden, die kleiner ist als die Nockenteilung TN zwischen den einzelnen oberseitigen (und unterseitigen) Nocken 4, 5 (vgl. Fig. 1, 2). Bei nur einem Stab 3 je Befestigungsstück 6 entspricht die Stabteilung TS hingegen der Nockenteilung TN des Riemens 2.

Durch die Verwendung einer Buchse 11 im Befestigungsbereich 9 kann der Übergang zu den Stäben 3 optimiert werden, woraus sich je nach Ausführung der Stäbe 3 und der Buchsen 11 mehrere Vorteile ergeben:
Zum einen kann die Befestigung der Stäbe 3 optimiert werden. Eine in Längsrichtung L vom Zwischenbereich 8 abragende Buchse 11 (oder Gesamtbuchse) bietet gegenüber einer ausschließlichen Befestigung am Zwischenbereich 8 (wie im Stand der Technik) eine robustere bzw. stabilere Aufnahme und damit einen optimaleren Halt bei auftretenden Biegemomenten, insbesondere bei einer Buchsenlänge L11 von beispielsweise zwischen 5mm und 30mm, vorzugsweise 15mm. In eine solche Buchse 11 kann der Stab 3 endseitig bis zu einer Einstecktiefe ET in eine darin befindliche Einstecköffnung 13 eingesteckt werden. Die Einstecktiefe ET entspricht dabei mindestens der Hälfte, vorzugsweise mindestens zwei Drittel der Buchsenlänge L11, d.h. mindestens 2.5 mm, vorzugsweise mindestens 7.5mm oder mehr.

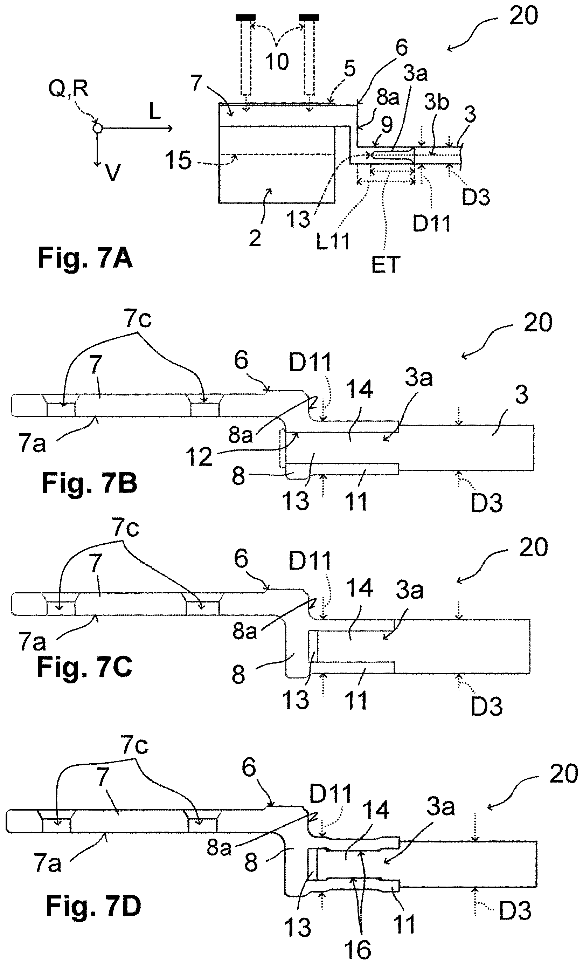

Die Stäbe 3 können dabei auch mit einer solchen Buchse 11 noch endseitig in Löcher 12 im Zwischenbereich 8 ragen und darüber zusätzlich am Zwischenbereich 8 befestigt sein, beispielsweise durch eine Nietverbindung oder dergleichen, wie in Fig. 7B gestrichelt angedeutet. Dies dient zusätzlich dazu, den jeweiligen Stab 3 axial und/oder verdrehfest am abgewinkelten Zwischenbereich 8 festzulegen. Die Buchse 11 sorgt dann ergänzend dafür, dass Biegemomente auf die Stäbe 3 effizient abgefangen und die Befestigung daher dauerhaft gesichert werden.

Vorzugsweise wird der eingesteckte Stab 3 in der Einstecköffnung 13 der Buchse 11 zusätzlich befestigt, insbesondere dann, wenn keine zusätzliche Befestigung am Zwischenbereich 8 vorgesehen ist. Die Befestigung in der Buchse 11 erfolgt beispielsweise durch Verklemmen bzw. Verpressen bzw. Krimpen, Kleben, Schweißen, oder dergleichen. Der Stab 3 kann auch eingeschraubt werden, wobei die Einstecköffnung 13 dazu ein entsprechendes Innengewinde aufweisen kann.

Weiterhin kann durch eine solche Buchse 11 der Temperaturübertrag zwischen den Stäben 3 und dem Befestigungsstück 6 oder dem Riemen 2 optimiert werden, da die Buchse 11 höhere Temperaturen effizient aufnehmen und ableiten kann, so dass sich die darin eingesteckten Stäbe 3 weniger stark erwärmen und folglich thermisch weniger beansprucht werden. Dies kann sich auf die Materialwahl der Stäbe 3 auswirken, wobei beispielsweise Glasfaser oder Kunststoff als gewichtssparendes Material verwendet werden kann. Grundsätzlich kann aber auch auf Stahl zurückgegriffen werden.

Außerdem kann durch eine solche Buchse 11 der Übergang zwischen dem Befestigungsstück 6 und dem jeweiligen Stab 3 variabler gestaltet werden, indem die Buchse 11 entsprechend an die Anwendung angepasst gefertigt wird. So kann wie oben bereits beschrieben die Einstecktiefe ET bzw. die Buchsenlänge L11 entsprechend der Anwendung vorab festgelegt werden, um eine gewünschte Stabilität oder Robustheit des Übergangs zu erhalten. Weiterhin kann auch die Form der Einstecköffnung 13 an die gewünschte Form des Stabes 3 bzw. des Stabendes 3a angepasst werden.

Im einfachsten Fall kann die Buchse 11 wie in Fig. 4, 5 oder 6 dargestellt hohlzylindrisch ausgeführt sein, so dass die Einstecköffnung 13 einen über ihre Länge gleichmäßigen Einsteck-Durchmesser D13 aufweist. Der Einsteck-Durchmesser D13 entspricht dabei in etwa dem Stab-Durchmesser D3 des Stabes 3 bzw. ist dieser nur geringfügig größer, um beim Einstecken bereits einen Reibschluss zwischen beiden zu erreichen. Der jeweilige Stab 3, der beispielsweise einen Stab-Durchmesser D3 von zwischen 5mm und 18mm aufweist, ist bei dieser Ausführung endseitig nicht mehr anzupassen, um über die Einstecköffnung 13 an der Buchse 11 befestigt zu werden, was den Herstellungsaufwand verringert.

Wie in Fig. 7A in einer Schnittansicht dargestellt, kann die Einstecköffnung 13 in der Buchse 11 aber auch eine andere Form mit einem in der Länge variierenden Einsteck-Durchmesser D13 aufweisen, beispielsweise zum Zwischenbereich 8 hin spitz zulaufend. In dieser Ausführung ist der Stab 3 an seinem Stabende 3a entsprechend komplementär dazu "anzuspitzen", so dass sich der Stab-Durchmesser D3 in dem einzusteckenden Bereich entsprechend zur Stirnseite hin verringert. Auch andere Formen der Einstecköffnung 13 und komplementäre Formen des Stabendes 3a sind möglich, beispielsweise ein zylindrischer Zapfen 14 am Stabende 3a, wie z.B. in Fig. 7B oder 7C gezeigt. Dieser zylindrische Zapfen 14 kann, wie in Fig. 7B gestrichelt angedeutet, auch bis in Löcher 12 im Zwischenbereich 8 ragen, um dann darüber endseitig eine Nietverbindung herzustellen, über die der jeweilige Stab 3 axial und verdrehsicher am abgewinkelten Zwischenbereich 8 festgelegt ist.

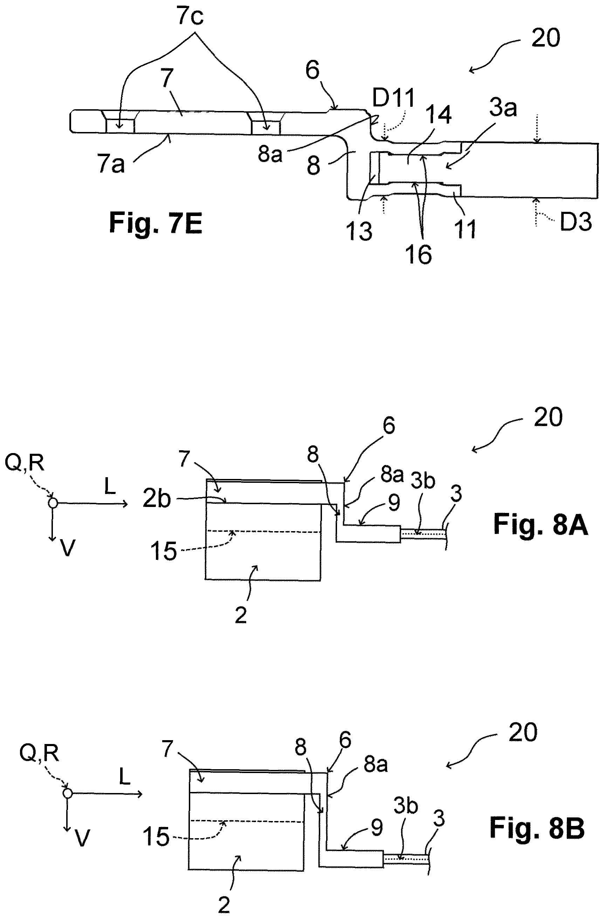

Um eine sichere Befestigung des Stabes 3 in der Buchse 11 zu ermöglichen, kann zusätzlich auch eine Vertiefung 16 in dem zylindrischen Zapfen 14 am Stabende 3a ausgebildet sein, wie in Fig. 7D und 7E dargestellt. In diese Vertiefung 16 kann die Wand der Buchse 11 durch entsprechende Verformung in Eingriff gebracht werden, um den Stab 3 in axialer Richtung und ggf. auch verdrehsicher an der Buchse 11 zu halten.

Ergänzend ist in Fig. 7A, 7C und 7E vorgesehen, dass der Buchsen-Durchmesser D11 der Buchse 11 dem Stab-Durchmesser D3 des Stabes 3 in dem Bereich außerhalb der Einstecköffnung 13 entspricht. Dadurch geht der Stab 3 direkt in die Buchse 11 über, so dass oberflächlich keine Kanten oder Absätze zwischen dem Stab 3 und dem Befestigungsstück 6 entstehen, an denen sich im Betrieb des Stabbandes 1 Schmutz o.ä. anlagern kann. Dadurch entsteht auch der Eindruck einer Einstückigkeit des Befestigungsstückes 6 mit dem jeweiligen Stab 3.

Der beschriebene Aufbau des Befestigungsstückes 6 ermöglicht weiterhin in einfacher Weise eine Festlegung der Einbaulage der Stäbe 3 bzw. der Ebene, in der die Stäbe 3 am fertigen Stabband 1 positioniert sind. Dabei ist vorgesehen, dass der Zwischenbereich 8 vom Auflagebereich 7 nach unten hin abgewinkelt ist, so dass die daran angeordneten Buchsen 11 in einer Ebene liegen, die sich unterhalb des Auflagebereiches 7 befinden, wie beispielhaft in den Fig. 8A, 8B dargestellt. Die in den Buchsen 11 aufgenommenen Stäbe 3 werden dadurch am Stabband 1 in einer Ebene positioniert, die unterhalb der Riemenoberseite 2b liegt.

Gemäß Fig. 8A verläuft der Zwischenbereich 8 in vertikaler Richtung V beispielsweise derartig weit nach unten in Richtung der Riemenunterseite 2c, dass die Buchse(n) 11 im Befestigungsbereich 9 und damit auch die Längsachsen 3b der jeweiligen Stäbe 3 in der Ebene der neutralen Faser 15 des Riemens 2 liegen. Gemäß Fig. 8B verläuft der Zwischenbereich 8 vom Auflagebereich 7 derartig in vertikaler Richtung V nach unten, dass die Buchse(n) 11 bzw. die Längsachsen 3b des oder der Stäbe 3 in einer Ebene unterhalb der neutralen Faser 15 des Riemens 2 liegen.

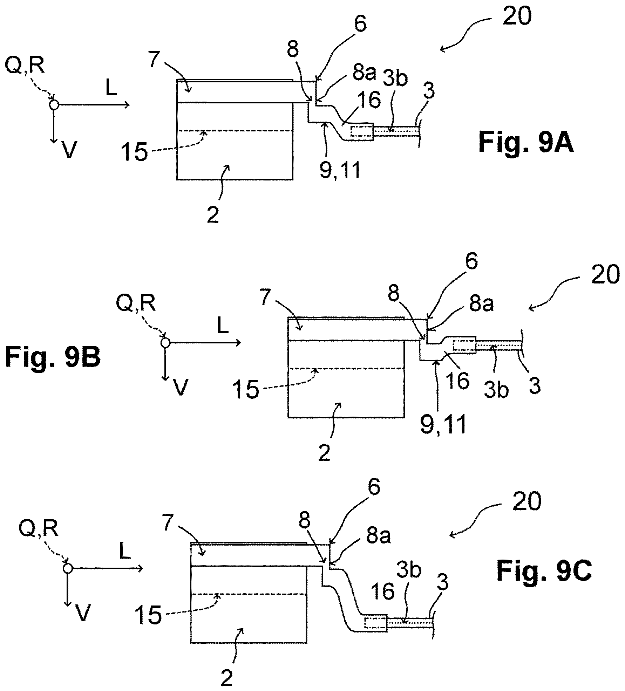

Eine andere oder weitere Möglichkeit der Festlegung der Einbaulage bzw. der Ebene der Stäbe 3 am Stabband 1 ist, die Buchse(n) 11 ausgehend von dem Zwischenbereich 8 zu verformen bzw. abzukröpfen, wie in den Figuren 9A, 9B, 9C beispielhaft dargestellt. Die Buchse 11 steht dabei auch weiterhin senkrecht in die Längsrichtung L vom Zwischenbereich 8 bzw. von der Seitenfläche 8a ab, ändert dann aber ihre Richtung, um dann endseitig wieder in die Längsrichtung L zu zeigen. Der Zwischenbereich 8 kann demnach immer identisch nach unten hin abgewinkelt sein und der Verlauf der Verformung bzw. Abkröpfung 17 wird so gewählt, dass die Längsachse 3b eines in die verformte bzw. abgekröpfte Buchse 11 eingesteckten Stabes 3 in der Ebene der neutralen Faser 15 des Riemens 2 (s. Fig. 9A) oder darüber (s. Fig. 9B) oder darunter (s. Fig. 9C) liegt. Dies kann im Übrigen auch mit einer entsprechend angepassten Ausdehnung und Positionierung des Zwischenbereiches 8, beispielsweise gemäß den Ausführungen der Figuren 8A, 8B, kombiniert werden.

Die Ausführungen in den Fig. 8A, 8B und 9A, 9B, 9C haben dabei den Vorteil, dass für jede Einbaulage immer derselbe Stab 3 verwendet werden kann und daher keine Anpassung oder Verformung des Stabes 3 selbst nötig ist. Dadurch wird der Herstellungsaufwand verringert, da sich das Befestigungsstück 6 in der Regel einfacher fertigen lässt als die Stäbe 3. Grundsätzlich kann jedoch auch ein verformter bzw. abgekröpfter Stab 3 verwendet werden, um die jeweilige Einbaulage am Stabband 1 festzulegen.

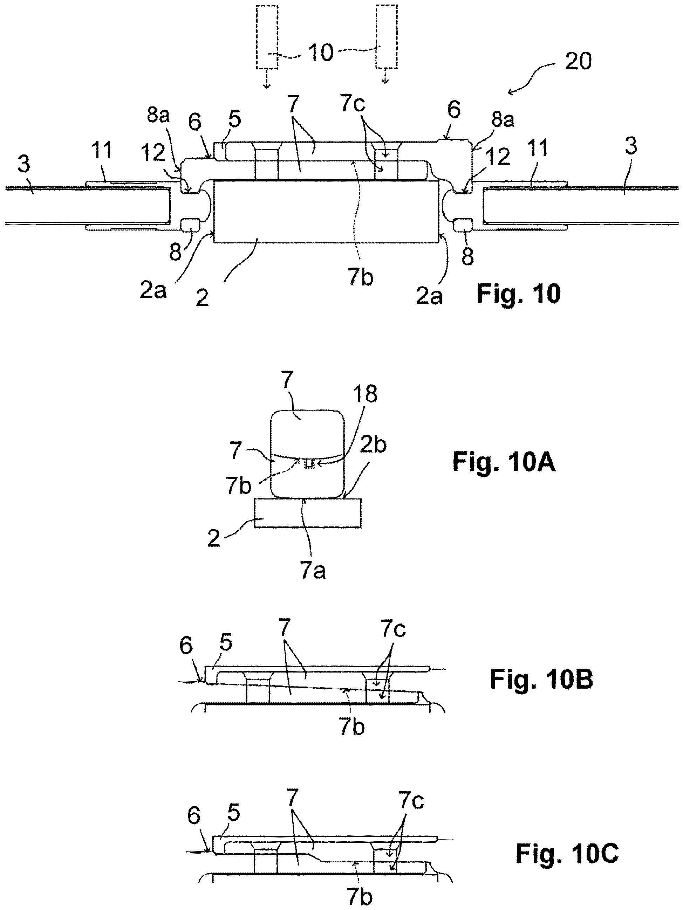

Gemäß Fig. 10 ist eine weitere Ausführung für die Befestigung der Stäbe 3 an einem inneren Riemen 2 dargestellt. In der vorab bereits beschriebenen Fig. 2 ist vorgesehen, dass der Auflagebereich 7 zu beiden Riemenaußenseiten 2a des inneren Riemens 2 hin einstückig in einen Zwischenbereich 8 übergeht. Dadurch können die Stäbe 3 über die Buchsen 11 beidseitig des inneren Riemens 2 in der jeweiligen Einbaulage sicher gehalten werden, wobei im Bereich des inneren Riemens 2 normalerweise höhere Biegemomente wirken, die über die Buchsen 11 entsprechend abgefangen werden. Bei dieser Variante der Befestigungsstücke 6 kommen die oben genannten konstruktiven Ausführungen ebenfalls zur Anwendung.

In der abgewandelten Ausführung gemäß Fig. 10 werden die Auflagebereiche 7 zweier Befestigungsstücke 6, die jeweils nur einen Zwischenbereich 8 aufweisen, um die Hochachse verdreht zueinander übereinandergelegt und gemeinsam durch entsprechende Befestigungsmittel 10, beispielsweise Niete, oder dergleichen, am inneren Riemen 2 befestigt. Die Befestigungsmittel 10 durchsetzen oder durchstoßen dabei die beiden gelochten Auflagebereiche 7 und auch den inneren Riemen 2.

Die beiden Befestigungsstücke 6 werden dabei derartig übereinandergelegt, dass sich parallel zu jeder Riemenaußenseite 2a des inneren Riemens 2 ein Zwischenbereich 8 befindet, über die beidseitig des inneren Riemens 2 die Stäbe 3 über die Buchsen 11 befestigt werden können. Es werden also zwei der oben beschriebenen Befestigungsstücke 6 miteinander kombiniert. Um eine in etwa identische Einbaulage der Stäbe 3 zu beiden Seiten des inneren Riemens 2 bzw. in etwa miteinander fluchtende Längsachsen 3b der Stäbe 3 zu erhalten, weist der Zwischenbereich 8 mit den Seitenflächen 8a des obenliegenden Befestigungsstückes 6 eine größere Ausdehnung in vertikaler Richtung V auf als der Zwischenbereich 8 des untenliegenden Befestigungsstücks 6. Das obenliegende Befestigungsstück 6 ist nämlich in vertikaler Richtung V um die Dicke des Auflagebereiches 7 des untenliegenden Befestigungsstückes 6 nach oben versetzt, was durch eine entsprechend größere vertikale Ausdehnung des Zwischenbereiches 8 bzw. der Seitenfläche 8a des obenliegenden Befestigungsstückes 6 idealerweise kompensiert wird. Dabei können Toleranzen von beispielsweise bis zu 3mm zwischen den Längsachsen 3b der entgegengesetzt ausgerichteten Stäbe 3 zugelassen werden.

Um eine Relativbewegung der beiden übereinanderliegenden Befestigungsstücke 6 in die Laufrichtung R des Riemens 2 und/oder in die Längsrichtung L der Befestigungsstücke 6 bzw. Stäbe 3 zu vermeiden, sind die einander zugekehrten Flächen 7b der beiden Auflagebereiche 7 nicht-planar ausgeführt. So können die einander zugekehrten Flächen 7b der beiden Auflagebereiche 7 beispielsweise wie in Fig. 10A in einer Schnittansicht dargestellt in die Laufrichtung L des Riemens 2 komplementär zueinander (konkav/konvex) gewölbt und/oder wie in Fig. 10B dargestellt in Längsrichtung L konisch verjüngt oder wie in Fig. 10C dargestellt abgestuft sein. Ergänzend können über eine Nut-Stift-Kombination 18, die stellvertretend lediglich in Fig. 10A eingezeichnet ist, Kraftspitzen abgefangen werden.

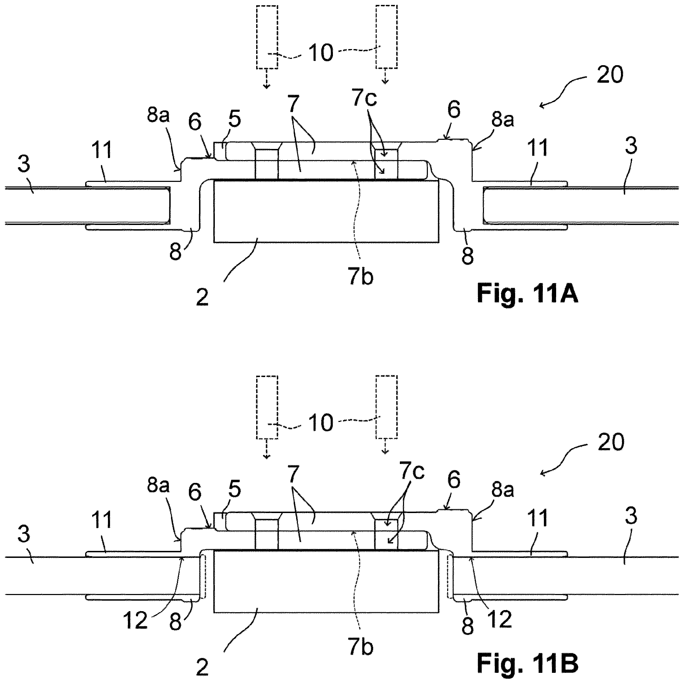

Die in Fig. 10, 10A, 10B, 10C dargestellten Ausführungen können auch für einstückig mit dem Zwischenbereich 8 gefertigten Buchsen 11 (s. Fig. 11A), an den Zwischenbereich 8 angenietete Stabenden 3b (s. Fig. 11B) und auch für andere Formen der Stabenden 3a und der Buchsen 11 zur Anwendung kommen. Die oben genannten Varianten sind demnach auch auf diese übereinanderliegende Ausführung anwendbar.

### Bezugszeichenliste

- 1: Stabband
- 2: Riemen
- 2a: Riemenaußenseite
- 2b: Riemenoberseite
- 2c: Riemenunterseite
- 3: Stab
- 3a: Stabende
- 3b: Längsachse des Stabes 3
- 4: unterseitiger Nocken
- 5: oberseitiger Nocken
- 6: Befestigungsstück
- 7: Auflagebereich
- 7a: Auflageseite
- 7b: zugekehrte Flächen
- 7c: Lochung
- 8: Zwischenbereich
- 8a: Seitenfläche
- 9: Befestigungsbereich
- 10: Befestigungsmittel
- 11: Buchse
- 12: Löcher
- 13: Einstecköffnung
- 14: zylindrischer Zapfen
- 15: neutrale Faser des Riemens 2
- 16: Vertiefung
- 17: Abkröpfung
- 18: Nut-Stift-Kombination
- 20: Stabanordnung
- A: Abstand
- D3: Stab-Durchmesser
- D11: Buchsen-Durchmesser
- D13: Einsteck-Durchmesser
- ET: Einsteck-Tiefe
- L: Längsrichtung
- L11: Buchsenlänge
- Q: Querrichtung
- R: Laufrichtung
- TN: Nockenteilung
- TS: Stabteilung
- V: vertikale Richtung

## Patentansprüche

1. Befestigungsstück (6) für ein mehrere Stäbe (3) aufweisendes Stabband (1) für landwirtschaftliche Maschinen, mindestens aufweisend:
- einen in eine Längsrichtung (L) ausgedehnten Auflagebereich (7) mit einer in vertikaler Richtung (V) unten liegenden Auflageseite (7a) zum Auflegen und Befestigen des Befestigungsstückes (6) auf einer Riemenoberseite (2b) eines Riemens (2) des Stabbandes (1),
- mindestens einen einstückig mit dem Auflagebereich (7) gefertigten Zwischenbereich (8), und
- einen von dem Zwischenbereich (8) in die Längsrichtung (L) abragenden Befestigungsbereich (9), wobei der Befestigungsbereich (9) durch mindestens eine Buchse (11) mit einer in die Längsrichtung (L) über eine Einstecktiefe (ET) ausgedehnten Einstecköffnung (13) ausgebildet ist, zum Einstecken eines Stabendes (3a) des Stabes (3),
**dadurch gekennzeichnet, dass**
der Zwischenbereich (8) im Querschnitt unrund ausgeführt ist und/oder exzentrisch an den Auflagebereich (7) angeformt ist und ausgehend von dem Auflagebereich (7) in vertikaler Richtung (V) nach unten hin abgewinkelt ist, so dass eine dem Auflagebereich (7) abgewandte Seitenfläche (8a) des Zwischenbereiches (8) in die Längsrichtung (L) zeigt, wobei die Buchse (11) von dieser Seitenfläche (8a) in die Längsrichtung (L) abragt und die Einstecköffnung (13) in der mindestens einen Buchse (11) unterhalb der Auflageseite (7a) des Auflagebereiches (7) verläuft.

2. Befestigungsstück (6) nach Anspruch 1, **dadurch gekennzeichnet, dass** der Zwischenbereich (8) ausgehend von dem Auflagebereich (7) senkrecht nach unten hin abgewinkelt ist, so dass die dem Auflagebereich (7) abgewandte Seitenfläche (8a) des Zwischenbereiches (8) senkrecht zur Längsrichtung (L) verläuft, und wobei die Buchse (11) senkrecht von dieser Seitenfläche (8a) abragt.

3. Befestigungsstück (6) nach Anspruch 1 oder 2, **dadurch gekennzeichnet, dass** die mindestens eine Buchse (11) des Befestigungsbereiches (9) einstückig mit dem Zwischenbereich (8) gefertigt ist zum Ausbilden eines einstückigen Befestigungsstückes (6).

4. Befestigungsstück (6) nach einem der vorhergehenden Ansprüche, **dadurch gekennzeichnet, dass** das Befestigungsstück (6) teilweise oder vollständig in einem subtraktiven oder additiven Fertigungsverfahren hergestellt ist, vorzugsweise unter Verwendung eines metallischen Werkstoffes oder eines thermoplastischen oder eines duroplastischen Polymers, beispielsweise in einem Fräsverfahren oder 3D-Druckverfahren, oder als ein Gussteil ausgebildet ist, vorzugsweise aus einem metallischen Werkstoff oder aus einem thermoplastischen oder einem duroplastischen Polymer.

5. Befestigungsstück (6) nach einem der vorhergehenden Ansprüche, **dadurch gekennzeichnet, dass** die dem Auflagebereich (7) abgewandte Seitenfläche (8a) des Zwischenbereiches (8) ergänzend in eine Querrichtung (Q) ausgedehnt ist, vorzugsweise leistenartig, und mindestens zwei Buchsen (11), vorzugsweise mindestens drei Buchsen (11), mit dem Zwischenbereich (8) fest verbunden sind und in die Längsrichtung (L) abragen, wobei die Buchsen (11) in Querrichtung (Q) in Abhängigkeit einer vorgegebenen Stabteilung (TS) zwischen den Stäben (3) voneinander beabstandet sind.

6. Befestigungsstück (6) nach einem der vorhergehenden Ansprüche, **dadurch gekennzeichnet, dass** die mindestens eine Buchse (11) und/oder der Zwischenbereich (8) in vertikaler Richtung (V) abgekröpft ist zum Festlegen einer Einbaulage der Stäbe (3).

7. Befestigungsstück (6) nach einem der vorhergehenden Ansprüche, **dadurch gekennzeichnet, dass** die Einstecköffnung (13) in der mindestens einen Buchse (11) einen Einsteck-Durchmesser (D13) aufweist,
- der über die Einstecktiefe (ET) konstant ist, so dass eine hohlzylindrische Einstecköffnung (13) ausgebildet wird zur Aufnahme eines zylindrischen Stabendes (3a) des einsteckbaren Stabes (3), oder
- der über die Einstecktiefe (ET) variiert, so dass beispielsweise eine zum Zwischenbereich (8) spitz zulaufende Einstecköffnung (13) ausgebildet wird zur Aufnahme eines spitz zulaufenden Stabendes (3a des einsteckbaren Stabes (3).

8. Befestigungsstück (6) nach einem der vorhergehenden Ansprüche, **dadurch gekennzeichnet, dass** eine Buchsenlänge (L11) der mindestens einen Buchse (11) zwischen 5mm und 30mm, vorzugsweise 15mm, entspricht, und die Einstecktiefe (ET) mindestens der Hälfte, vorzugsweise mindestens zwei Drittel der Buchsenlänge (L11) entspricht.

9. Stabanordnung (20) aus einem Befestigungsstück (6) nach einem der vorhergehenden Ansprüche und mindestens einem in der Einstecköffnung (13) der mindestens einen Buchse (11) des Befestigungsbereiches (9) aufgenommenen Stabes (3).

10. Stabanordnung (20) nach Anspruch 9, **dadurch gekennzeichnet, dass** ein Stab-Durchmesser (D3) des aufgenommenen Stabes (3) außerhalb der Buchse (11) einem Buchsen-Durchmesser (D11) der mindestens einen Buchse (11) entspricht.

11. Stabanordnung (20) nach Anspruch 9 oder 10, **dadurch gekennzeichnet, dass** der mindestens eine Stab (3) durch eine stoffschlüssige und/oder kraftschlüssige und/oder formschlüssige Verbindung in der Einstecktiefe (ET) in der mindestens einen Buchse (11) gehalten ist, wobei das Stabende (3a) des aufgenommenen Stabes (3) komplementär zu der Einstecköffnung (13) ausgebildet ist, beispielsweise zylindrisch oder spitz zulaufend, und/oder die Einstecköffnung (13) der mindestens einen Buchse (11) mit einem Loch (12) in dem Zwischenbereich (8) fluchtet und der Stab (3) mit seinem Stabende (3a) in das Loch (12) ragt und der Stab (3) darüber axial und/oder verdrehfest am Zwischenbereich (8) festgelegt ist, beispielsweise durch eine Nietverbindung.

12. Stabband (1) für landwirtschaftliche Maschinen mit mindestens zwei parallel zueinander verlaufenden, zugfesten und elastischen endlosen Riemen (2), die in einer Laufrichtung (R) ausgedehnt sind, und mit quer zu der Laufrichtung (R) und parallel zueinander angeordneten Stäben (3), die zwischen zwei Riemen (2) verlaufen und dazu mit ihren beiden Stabenden (3a) jeweils in einem Befestigungsbereich (9) eines mit dem Riemen (2) verbundenen Befestigungsstückes (6) aufgenommen sind, insbesondere eines Befestigungsstückes (6) nach einem der Ansprüche 1 bis 8, wobei das jeweilige Befestigungsstück (6) mindestens aufweist:
- einen in eine Längsrichtung (L) ausgedehnten Auflagebereich (7) mit einer in vertikaler Richtung (V) unten liegenden Auflageseite (7a), über die das Befestigungsstück (6) auf einer Riemenoberseite (2b) eines der Riemen (2) des Stabbandes (1) aufliegt und daran befestigt ist,
- mindestens einen einstückig mit dem Auflagebereich (7) gefertigten Zwischenbereich (8), und
- einen von dem Zwischenbereich (8) in die Längsrichtung (L) abragenden Befestigungsbereich (9), wobei der Befestigungsbereich (9) durch mindestens eine Buchse (11) mit einer in die Längsrichtung (L) über eine Einstecktiefe (ET) ausgedehnten Einstecköffnung (13) ausgebildet ist, in die ein Stabende (3a) eines der Stäbe (3) eingesteckt ist,
**dadurch gekennzeichnet, dass**
der Zwischenbereich (8) im Querschnitt unrund ausgeführt ist und/oder exzentrisch an den Auflagebereich (7) angeformt ist und ausgehend von dem Auflagebereich (7) und der Riemenoberseite (2b) in vertikaler Richtung (V) nach unten hin abgewinkelt ist, so dass eine dem Auflagebereich (7) und dem Riemen (2) abgewandte Seitenfläche (8a) des Zwischenbereiches (8) in die Längsrichtung (L) zeigt, wobei die mindestens eine Buchse (11) von dieser Seitenfläche (8a) in die Längsrichtung (L) abragt und die Einstecköffnung (13) in der mindestens einen Buchse (11) und/oder die Längsachse (3b) des jeweiligen darin eingesteckten Stabes (3) unterhalb der Auflageseite (7a) des Auflagebereiches (7) sowie der Riemenoberseite (2b) des Riemens (2) verläuft.

13. Stabband (1) nach Anspruch 12, **dadurch gekennzeichnet, dass** der Zwischenbereich (8) des Befestigungsstückes (6) derartig senkrecht abgewinkelt mit dem Auflagebereich (7) verbunden ist, dass der Zwischenbereich (8) parallel zu einer Riemenaußenseite (2a) des Riemens (2), an dem das Befestigungsstück (6) befestigt ist, verläuft, wobei ein Abstand (A) zwischen der Riemenaußenseite (2a) und dem Zwischenbereich (8) maximal 10mm beträgt oder der Zwischenbereich (8) die Riemenaußenseite (2a) berührt.

14. Stabband (1) nach Anspruch 12 oder 13, **dadurch gekennzeichnet, dass** der Zwischenbereich (8) des Befestigungsstückes (6) derartig abgewinkelt mit dem Auflagebereich (7) verbunden ist, dass die mindestens eine damit verbundene Buchse (11) und/oder eine Längsachse (3b) des darin aufgenommenen Stabes (3) in der Ebene einer neutralen Faser (15) des Riemens (2) oder oberhalb oder unterhalb der Ebene der neutralen Faser (15) des Riemens (2) liegen, vorzugsweise in einem Bereich von +/- 2mm um die neutrale Faser (15).

15. Stabband (1) nach einem der Ansprüche 12 bis 14, **dadurch gekennzeichnet, dass** an einem Befestigungsstück (6) über mindestens zwei voneinander in Querrichtung (Q) beabstandete Buchsen (11) mindestens zwei Stäbe (3) aufgenommen sind, wobei ein Abstand zwischen den Buchsen (11) in Abhängigkeit einer vorgesehenen Stabteilung (TS) zwischen den Stäben (3) am Stabband (1) gewählt ist, wobei die Stabteilung (TS) kleiner ist als eine Nockenteilung (TN) zwischen unterseitigen Nocken (4) und/oder oberseitigen Nocken (4) an dem jeweiligen Riemen (2).
